# EUROPÄISCHE PATENTSCHRIFT

(11) **EP 2 217 494 B1**
(45) Veröffentlichungstag und Bekanntmachung des Hinweises auf die Patenterteilung: **20.02.2013**
(21) Anmeldenummer: 08858890.0
(22) Anmeldetag: 11.12.2008
(51) Int. Cl.: B64D 11/00

(54) **STAUFACHANORDNUNG**
STORAGE LOCKER ARRANGEMENT
ENSEMBLE COMPARTIMENT DE RANGEMENT

(30) Priorität: 12.12.2007 DE 102007059686; 12.12.2007 US 7302
(43) Veröffentlichungstag der Anmeldung: 18.08.2010
(73) Patentinhaber: Airbus Operations GmbH, 21129 Hamburg (DE); Airbus SAS, 31707 Blagnac Cedex (FR)
(72) Erfinder: BOCK, Thomas, F-31330 Grenade (FR); DEHN, Martin, 21521 Aumühle (DE); SCOLEY, Ian, 22559 Hamburg (DE); STURM, Ralph, 22869 Schenefeld (DE)
(74) Vertreter: Maiwald Patentanwalts GmbH
(86) Internationale Anmeldenummer: PCT/EP2008/067283
(87) Internationale Veröffentlichungsnummer: WO 2009/074631

(56) Entgegenhaltungen:
- WO-A-2008/012427
- DE-A1- 4 425 869
- DE-U1- 20 120 481
- US-A1- 2002 101 090
- US-A1- 2006 237 585
- US-A1- 2007 095 981

## Beschreibung

### BEREICH DER ERFINDUNG

Die vorliegende Erfindung betrifft eine Staufachanordnung, insbesondere eine Staufachanordnung für ein Flugzeug und ein Flugzeug mit einer erfindungsgemäßen Staufachanordnung.

### HINTERGRUND DER ERFINDUNG

Beim Passagiertransport in Fahrzeugen und insbesondere in Flugzeugen muss das Gepäck der Passagiere während der Reise sicher verstaut und aufbewahrt werden. Ein Teil der leichteren Gepäckstücke, auch als Handgepäck bezeichnet, kann im Flugverkehr in die Kabine des Flugzeugs mitgenommen werden. Meistens sind in der Kabine Ablagen für das Handgepäck vorgesehen. Heutzutage sind die gängigen Ablagen über den Passagiersitzen angebracht, im Ganzen fest mit der Struktur des Flugzeugs und mit der Verkleidung der Kabine verbunden und mit einer Klappe ausgestattet. Alternativ werden die Ablagen als Schütte ausgestaltet und an ihrem untersten Punkt drehbar mit der Struktur des Flugzeugs verbunden.

Beispielsweise ist aus US 2002/0101090 A1 ein Pull-Down-Staufach für ein Fahrzeug bekannt. Das Staufach weist einen Rahmen und ein mit dem Rahmen verbundenes Fach auf. Das Fach kann zwischen einer offenen und einer geschlossenen Position bewegt werden.

Um das Gepäck in der Ablage zu platzieren, muss ein Passagier das Gepäckstück auf die erforderliche Höhe hieven, was je nach Gewicht des Gepäckstücks einen enormen Kraftaufwand erfordern kann. Bei der als Schütte ausgestalteten Ablage, muss der Passagier nach dem Platzieren des Gepäcks in der Ablage zum Schließen der Schütte viel Kraft aufwenden, um das Gewicht des Gepäckstücks und das Gewicht der Schütte nach oben zu bewegen.

Es kann daher als eine Aufgabe der vorliegenden Erfindung angesehen werden, eine verbesserte Staufachanordnung bereitzustellen, bei der insbesondere die oben beschriebenen Probleme des Standes der Technik zumindest teilweise überwunden werden.

### ZUSAMMENFASSUNG DER ERFINDUNG

Diese Aufgabe kann durch den Gegenstand der vorliegenden Erfindung gemäß dem unabhängigen Anspruch gelöst werden. Vorteilhafte Ausführungsformen der vorliegenden Erfindung sind in den abhängigen Ansprüchen beschrieben.

Gemäß einem ersten Aspekt der vorliegenden Erfindung wird eine Staufachanordnung für ein Flugzeug beschrieben. Die Staufachanordnung weist ein Staufach mit einem Stauraum zur Aufnahme von Gepäckstücken und eine Aufhängung zur Anbringung des Staufachs an eine tragende Struktur des Flugzeugs auf. Dabei ist die Aufhängung derart ausgestaltet, dass das Staufach im Wesentlichen um einen geometrischen Mittelpunkt des Stauraums herum verschwenkt werden kann.

Anders ausgedrückt basiert eine Idee der vorliegenden Erfindung gemäß dem ersten Aspekt auf der schwenk- bzw. drehbar gelagerten Aufhängung des Staufaches der Staufachanordnung an tragenden Strukturen des Flugzeugs so, dass der geometrische Mittelpunkt des Stauraums und vorzugsweise auch der Schwerpunkt des homogen beladenen Staufaches im Bereich einer Schwenk- bzw. Drehachse der Aufhängung liegt. Dadurch kann eine Schwenkbarkeit bzw. Drehbarkeit des Staufaches ohne großen Kraftaufwand um einen Punkt oder um eine Achse erreicht werden. Zusätzlich kann durch das Verschwenken des Staufaches die Ladekantenhöhe herabgesetzt werden, so dass ein Passagier bei einem offenen Staufach sein Gepäckstück weniger hoch hieven muss. Ist das Gepäckstück durch den Passagier in das Staufach hineingelegt worden, so kann es dank der oben erwähnten Aufhängung mit geringem Kraftaufwand geschlossen werden.

Im Folgenden werden mögliche Merkmale, Einzelheiten und Vorteile einer Staufachanordnung gemäß dem ersten Aspekt der Erfindung im Detail diskutiert.

Die Staufachanordnung weist ein Staufach oder mehrere Staufächer auf, die auch als Bins bezeichnet werden. Der Stauraum kann ein Raum sein, den das Staufach mit den umgebenden Strukturen des Flugzeugs umgibt bzw. einschließt. In dem Stauraum können Gepäckstücke des Handgepäcks aufbewahrt werden. Ein Staufach kann den Stauraum komplett oder teilweise umgeben und optional mit einer Klappe versehen sein. Mögliche Beispiele für die Formgebung eines den Stauraum komplett umschließenden Staufaches können ein Quader oder ein Ellipsoid eventuell mit einer Klappe sein.

Die Aufhängung kann eine flexible, d.h. schwenkbare bzw. drehbare Verbindung zwischen dem Staufach und tragenden Strukturen des Flugzeugs sein. Die Aufhängung kann an einem oder vorzugsweise mehreren Punkten des Staufaches befestigt sein und des Weiteren so ausgestaltet sein, dass das Staufach um einen Punkt oder um eine oder mehrere Achsen geschwenkt bzw. gedreht werden kann. Dabei ist die Aufhängung derart ausgestaltet, dass das Staufach im Wesentlichen um einen geometrischen Mittelpunkt des Stauraums herum verschwenkt werden kann. "Im Wesentlichen" kann dabei eine radiale Abweichung vom geometrischen Mittelpunkt um bis zu 20 cm, bevorzugt um bis zu 10 cm und noch stärker bevorzugt um bis zu 5 cm bedeuten.

Der geometrische Mittelpunkt kann zum Beispiel bei einer symmetrischen Ausgestaltung des Stauraumes bzw. des Staufaches der Mittelpunkt sein, der bei einem Quader oder Parallelogramm durch den Schnittpunkt der Diagonalen und bei einer Ellipse durch den Schnittpunkt der Achsen gegeben ist. Der geometrische Mittelpunkt des Stauraumes kann mit dem Schwerpunkt des leeren und vorzugsweise des homogen beladenen Staufaches zusammenfallen und/oder auf einer Drehachse durch die Aufhängung liegen.

Der Begriff "drehen" kann hier beispielsweise eine Rotationsbewegung des Staufachs bedeuten. Die Rotationsbewegung kann dabei um einen Punkt oder eine Achse stattfinden. Der Begriff "schwenken" kann hier beispielsweise eine Rotations- und gleichzeitig eine Translationsbewegung bedeuten. Die Translationsbewegung kann dabei einer beliebigen Kurve folgen. Beispielsweise kann das Staufach um eine durch den geometrischen Mittelpunkt des Stauraumes verlaufende Achse gedreht bzw. rotiert werden und diese virtuelle Achse auf einer gekrümmten Bahn verfahren werden.

Gemäß einer Ausführungsform der vorliegenden Erfindung ist die Aufhängung als eine erste Drehachse ausgestaltet.

Die Ausgestaltung der Aufhängung als Drehachse kann zum Beispiel dadurch realisiert werden, dass das Staufach an zwei gegenüberliegenden Punkten drehbar mit der tragenden Struktur des Flugzeugs verbunden ist. Damit kann das Staufach um eine Drehachse gedreht werden. Der Beladevorgang des Staufaches kann hierdurch für einen Passagier erheblich erleichtert werden, da durch das Verdrehen des Staufaches eine niedrigere Ladekantenhöhe als bei herkömmlichen Gepäckfächem erreicht werden kann und der Passagier sein Gepäckstück in eine geringere Höhe anheben muss.

Gemäß einer weiteren Ausführungsform der vorliegenden Erfindung ist die Aufhängung derart ausgestaltet, dass ein Punkt, um den herum sich das Staufach beim Verschwenken bewegt, im Wesentlichen mit einem Schwerpunkt des homogen beladenen Stauraumes zusammenfällt.

Die homogene Beladung des Staufaches kann eine gleichmäßigen Verteilung der Gepäckstücke im Stauraum sein. Anders ausgedrückt kann das homogen beladene Staufach an jeder Stelle die gleiche Dichte, d.h. Gewicht pro Volumen haben.

Der Schwerpunkt im Sinne der klassischen Mechanik kann der Punkt sein, an dem sich ein Körper im Gleichgewicht befindet, wenn er in diesem Punkt unterstützt bzw. befestigt ist. Das bedeutet in anderen Worten, dass das Staufach, dessen Aufhängung derart ausgestaltet ist, dass das Staufach im Wesentlichen mit dem Schwerpunkt des homogen beladenen Stauraumes zusammenfällt, sich im Gleichgewicht befindet und nur ein sehr geringer Kraftaufwand notwendig sein kann, um das Staufach von einer Position in eine andere zu bewegen. Dies kann einen erheblichen Vorteil für die Passagiere eines Flugzeugs darstellen, die dank der Ausgestaltung der Aufhängung des Staufaches nur wenig Kraft benötigen, um ein schwer beladenes Staufach durch eine Dreh- oder Schwenkbewegung zu schließen bzw. zu öffnen. Damit kann es auch weniger großen und schwächeren Passagieren ermöglicht werden, ein Staufach selbstständig und ohne fremde Hilfe zu bedienen. In dieser Ausgestaltung wird die Staufachanordnung auch als Center Gravity Bin bezeichnet.

Gemäß einer weiteren Ausführungsform der vorliegenden Erfindung weist die Staufachanordnung ferner Richtelemente auf. Die Richtelemente sind ausgestaltet, eine Verlagerung eines Schwerpunktes des homogen beladenen Stauraumes in den geometrischen Mittelpunkt zu begünstigen.

Richtelemente können mechanische und/oder elektrische Hilfsmittel, wie zum Beispiel Federn sein. Ein Beispiel für ein Richtelement könnte eine am Staufach befestigte Feder mit einer vorbestimmten Federhärte sein. Im offenen Zustand des Staufaches könnte die Feder gespannt sein und dem Öffnen entgegenwirken so, dass das schwer beladene Staufach zum Teil durch die Kraft der Feder in die geschlossene Position verschoben werden kann. Ein alternatives Beispiel für ein Richtelement könnte eine Vorrichtung sein, die zum Einen beispielsweise durch eine Waageanordnung die Gewichtsverteilung im Stauraum bestimmen kann und zum Anderen durch das mechanische Verschieben von Wänden des Staufaches bzw. Verlagern und Verkippen des Gepäckstücks die Verlagerung des Schwerpunktes des beladenen Staufaches in den geometrischen Mittelpunkt begünstigen kann. Durch derartige Richtelemente können beispielsweise Abweichungen korrigiert werden, falls der Stauraum nicht homogen beladen ist, sondern beispielsweise nur zum Teil gefüllt ist.

Gemäß einer weiteren Ausführungsform der vorliegenden Erfindung weist die Staufachanordnung eine um eine zweite Drehachse schwenkbare Klappe auf. Die Staufachanordnung ist dabei derart ausgestaltet, dass beim Öffnen des Staufaches die Klappe sich um die zweite Drehachse entgegen der Bewegungsrichtung des Staufaches bewegt.

Die schwenkbare Klappe kann vorzugsweise mit dem Verkleidungsmaterial der Kabine verkleidet sein oder alternativ das Verkleidungsmaterial der Kabine aufweisen. Die Klappe kann an einem, vorzugsweise zwei oder mehreren Punkten befestigt sein. Einerseits kann die Klappe an dem Staufach angeordnet bzw. befestigt sein. Andererseits kann die Klappe bevorzugter Weise an der Verkleidung der Flugzeugkabine angeordnet bzw. befestigt sein. Zusätzlich kann die Klappe an dem Staufach befestigbar sein. Zum Beispiel kann die Klappe in einer geschlossenen Position des Staufaches in eine Schließvorrichtung an der äußeren, der Kabine des Flugzeugs zugewandten Seite des Staufaches einrasten. In einer offenen Position des Staufaches kann die Klappe an der anderen, der Außenwand des Flugzeugs näheren Seite des Staufaches befestigt werden oder automatisch einrasten. Des Weiteren kann die Klappe schwenkbar oder drehbar gelagert sein.

Dem Öffnen des Staufaches kann beispielsweise eine Kipp- bzw. Rotations- oder Schwenkbewegung des Staufaches, mit einer offenen Seite zur Kabine hin, entsprechen. Beim Öffnen des Staufaches bewegt sich die Klappe um die zweite Drehachse entgegen der Bewegungsrichtung des Staufaches. "Entgegen der Bewegungsrichtung des Staufaches" kann hier beispielsweise folgendermaßen verstanden werden: Geht man beispielsweise davon aus, dass sich sowohl das Staufach als auch die Klappe im geschlossenen Zustand in einer waagrechten Position befinden, so bewegt sich das Staufach beim Öffnen im Uhrzeigersinn um den geometrischen Mittelpunkt des Stauraumes, wobei sich dessen Öffnung nach unten bewegt und die Klappe bewegt sich mit der nicht befestigten Seite ebenfalls im Uhrzeigersinn nach oben. Es können sich also sowohl das Staufach, als auch die Klappe um die jeweilige Achse im Uhrzeigersinn bewegen bzw. drehen.

Durch diese Bewegung der Klappe kann der Verfahrweg des Staufaches deutlich verkürzt werden, da nur noch ein Teil des Weges durch das Staufach zurückgelegt werden muss, bis der Stauraum vollständig zugänglich ist.

Gemäß einer weiteren Ausführungsform der vorliegenden Erfindung steht das Staufach durch ein Hebelsystem mit der Klappe derart in Verbindung, dass eine Bewegung des Staufaches auf die Klappe und umgekehrt übertragen wird.

Das Hebelsystem kann eine Anordnung aus mehreren Hebeln sein, die beispielsweise über Gelenke mit einander in Verbindung stehen können. Um eine möglichst große Hebelwirkung erzielen zu können, kann einer der Befestigungs- bzw. Angriffspunkte der Hebel ein Punkt sein, der sich möglichst weit weg von der Klappe hinter dem Aufhängungspunkt des Staufaches aus Sicht der Klappe befindet. Auf diese Weise kann der Schwung des Staufaches bzw. der Klappe beim Öffnen ausgenutzt werden, so dass kein zusätzlicher Kraftaufwand notwendig ist, um die Klappe bzw. das Staufach zu öffnen. Zusätzlich können auf diese Weise für Passagiere ästhetisch ansprechende, fließende Bewegungen erzeugt werden.

Gemäß einer weiteren Ausführungsform der vorliegenden Erfindung ist das Staufach ausgestaltet, sich zwischen einer ersten Position und einer zweiten Position zu bewegen. Dabei verschließt die Klappe in der ersten Position den Zugriff auf das Staufach und das Staufach ist in der ersten Position gegenüber der Horizontalen derart geneigt, dass die der Klappe zugewandte Seite des Staufachs sich oberhalb des geometrischen Mittelpunktes des Staufaches befindet. In der zweiten Position ist das Staufach gegenüber der Horizontalen derart geneigt, dass die der Klappe zugewandte Seite des Staufachs sich auf Höhe oder unterhalb des geometrischen Mittelpunktes des Staufaches befindet.

Das Staufach kann in der Lage sein sich zwischen einer geschlossenen ersten Position und einer geöffneten zweiten Position zu bewegen. In der geschlossenen Position verschließt die Klappe den Zugang zur Öffnung des Staufaches. Des Weiteren ist das Staufach in der geschlossenen Position so ausgerichtet bzw. geneigt, dass die der Klappe zugewandte Seite des Staufachs, also die Seite mit der Öffnung durch die ein Gepäckstück in das Staufach gelangen kann, sich oberhalb des geometrischen Mittelpunktes des Staufaches befindet. Dies hat den Vorteil, dass das Gepäckstück unter Einwirkung der Schwerkraft nach unten, also weg von der Öffnung des Staufaches rutscht und damit das Staufach in der geschlossen Position stabilisiert. In anderen Worten kann auf diese Weise die Gefahr reduziert werden, dass beispielsweise bei eventuell auftretenden Turbulenzen das Staufach aufgehen und die enthaltenen Gepäckstücke wieder herausfallen könnten.

Analog ist das Staufach in der zweiten Position gegenüber der Horizontalen derart geneigt, dass die der Klappe zugewandte Seite des Staufachs sich auf Höhe oder unterhalb des geometrischen Mittelpunktes des Staufaches befindet. Dies macht die Öffnung des Staufaches für Passagiere leichter zugänglich.

Gemäß einer weiteren Ausführungsform der vorliegenden Erfindung weist die Staufachanordnung ferner eine Verkleidung auf. Die Verkleidung ist dabei an dem Staufach angeordnet und die Klappe in der ersten Position ist dabei als eine Verlängerung der Verkleidung ausgestaltet.

Die Verkleidung kann der Herstellung einer optisch ansprechenden Kabinenform dienen. Die Anordnung der Verkleidung an dem Staufach kann zur optischen Eingliederung des Staufaches in die Kabine beitragen.

Befindet sich das Staufach in der geschlossenen ersten Position, so kann sich die Klappe eventuell dank der Verbindung über das Hebelsystem ebenfalls in der geschlossenen ersten Position befinden. In dieser geschlossenen Position kann die Klappe als eine Verlängerung sowohl der Verkleidung an dem Staufach als auch der umgebenden Kabine und vorzugsweise von beiden ausgestaltet sein. Anders ausgedrückt kann die Klappe auf allen Seiten bündig mit der Verkleidung der Kabine abschließen und zu einer optisch ansprechenden Ausgestaltung der Kabine des Flugzeugs beitragen.

Gemäß einer weiteren Ausführungsform der vorliegenden Erfindung ist die Klappe in der zweiten Position als eine Verlängerung einer inneren Staufachwand ausgestaltet.

Die innere Staufachwand kann die Wand eines Staufaches sein, die an die Öffnung des Staufaches anschließen kann, und die bei einer Quader-ähnlichen Ausgestaltung des Staufaches parallel zu der verkleideten, der Kabine zugewandten Wand, des Staufaches verlaufen kann. In der offenen zweiten Position des Staufaches kann die Klappe als eine Verlängerung der inneren Staufachwand dienen. Das bündige Abschließen der Klappe mit der inneren Staufachwand, kann der optischen Einheitlichkeit der Kabine dienen und zusätzlich den Raum hinter der Verkleidung vor Zugriffen und Verschmutzung schützen.

Gemäß einer weiteren Ausführungsform der vorliegenden Erfindung sind die erste Drehachse und die zweite Drehachse parallel angeordnet.

Durch die parallele Anordnung der ersten Drehachse der Aufhängung des Staufaches einerseits und der zweiten Drehachse der Klappe andererseits kann eine harmonische Funktionsweise der Staufachanordnung gefördert werden.

Gemäß einem zweiten Aspekt der vorliegenden Erfindung wird ein Flugzeug mit Staufachanordnung gemäß einem der vorhergehenden Ausführungsbeispiele beschrieben.

Gemäß einer Ausführungsform der vorliegenden Erfindung ist die Klappe ausgestaltet, an einer Kabinenverkleidung schwenkbar angeordnet zu werden. Dabei ist die Klappe in der ersten Position als eine Verlängerung der Kabinenverkleidung ausgestaltet.

Weitere Merkmale und Vorteile der vorliegenden Erfindung werden dem Fachmann aus der nachfolgenden Beschreibung beispielhafter Ausführungsformen, die jedoch nicht als die Erfindung beschränkend auszulegen sind, unter Bezugnahme auf die begleitenden Zeichnungen ersichtlich.

### BESCHREIBUNG DER FIGUREN

Fig. 1 zeigt eine Seitenansicht einer Staufachanordnung in einem Flugzeug mit einem Staufach in einer offenen Position.
Fig. 2 zeigt eine Seitenansicht einer Staufachanordnung in einem Flugzeug mit einem Staufach in einer geschlossenen Position.
Fig. 3 zeigt eine Seitenansicht einer Staufachanordnung in einem Flugzeug mit einem Staufach in einer offenen Position gemäß einem weiteren Ausführungsbeispiel der vorliegenden Erfindung.
Fig. 4 zeigt eine Seitenansicht einer Staufachanordnung in einem Flugzeug mit einem Staufach in einer mittleren Position gemäß einem weiteren Ausführungsbeispiel der vorliegenden Erfindung.
Fig. 5 zeigt eine Seitenansicht einer Staufachanordnung in einem Flugzeug mit einem Staufach in einer geschlossenen Position gemäß einem weiteren Ausführungsbeispiel der vorliegenden Erfindung.
Fig. 6 zeigt eine räumlich-perspektivische Ansicht einer Flugzeugkabine mit einer erfindungsgemäßen Staufachanordnung mit mehreren Staufächern, von denen eines in einer offenen Position ist.
Fig. 7 zeigt eine räumlich-perspektivische Ansicht einer Flugzeugkabine mit einer erfindungsgemäßen Staufachanordnung mit mehreren Staufächern, von denen alle in einer geschlossenen Position sind.
Fig. 8a zeigt eine Seitenansicht einer Staufachanordnung mit einem Staufach in einer offenen Position gemäß einem weiteren Ausführungsbeispiel der vorliegenden Erfindung.
Fig. 8b zeigt eine räumlich-perspektivische Ansicht der in Fig. 8a dargestellten Staufachanordnung mit einem Staufach in einer offenen Position gemäß einem weiteren Ausführungsbeispiel der vorliegenden Erfindung.
Fig. 9a zeigt eine Seitenansicht einer Staufachanordnung mit einem Staufach in einer geschlossenen Position gemäß einem weiteren Ausführungsbeispiel der vorliegenden Erfindung.
Fig. 9b zeigt eine räumlich-perspektivische Ansicht der in Fig. 9a dargestellten Staufachanordnung mit einem Staufach in einer geschlossenen Position gemäß einem weiteren Ausführungsbeispiel der vorliegenden Erfindung.

Alle Figuren sind lediglich schematische Darstellungen erfindungsgemäß ausgestalteter Staufachanordnungen in einem Flugzeug bzw. ihrer Bestandteile. Insbesondere Abstände und Größenrelationen sind in den Figuren nicht maßstabsgetreu wiedergegeben. In den verschiedenen Figuren sind gleiche oder identische Elemente mit den gleichen Referenznummern versehen.

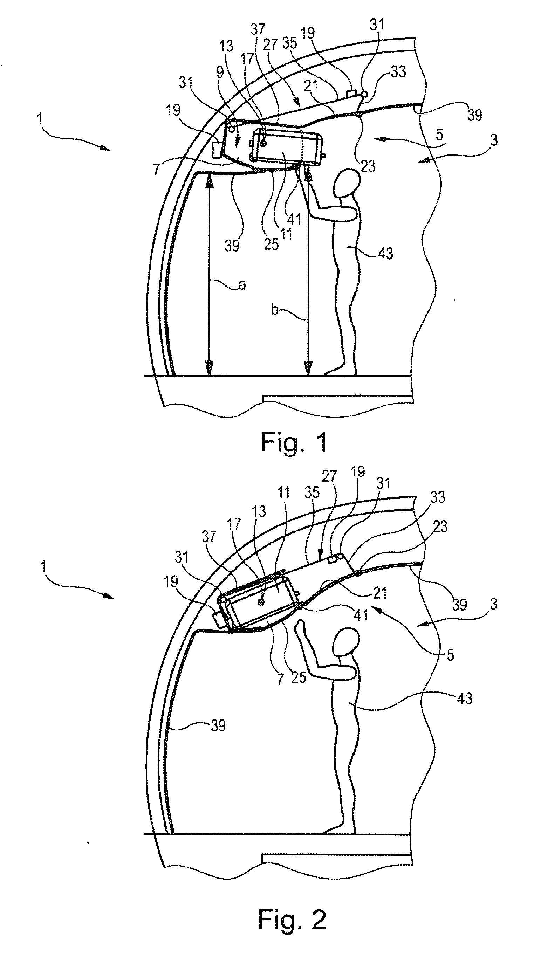

In Fig. 1 ist eine Seitenansicht einer Staufachanordnung 5 in einem Flugzeug 1 mit einem Staufach 7 in einer offenen Position dargestellt. In der Flugzeugkabine 3 befindet sich ein Passagier 43, der ein Gepäckstück 11 in die Staufachvorrichtung 5 reinlegt oder es entfernt. Die Staufachvorrichtung 5 weist ein Staufach 7 mit einem Stauraum 9 und eine Klappe 21 auf. Die Klappe 21 ist durch ein Hebelsystem 27, bestehend aus mehreren Gelenken 31 und einem ersten Arm 33 und einem zweiten Arm 35, mit dem Staufach 7 derart verbunden, dass die Bewegung des Staufaches 7 auf die Klappe 21 übertragen werden kann. Beim Öffnen drehen sich sowohl das Staufach 7 als auch die Klappe 21 in dem dargestellten Beispiel im Uhrzeigersinn. In Fig. 1 und in Fig. 2 ist eines der Gelenke 31 direkt am Staufach 7 angeordnet.

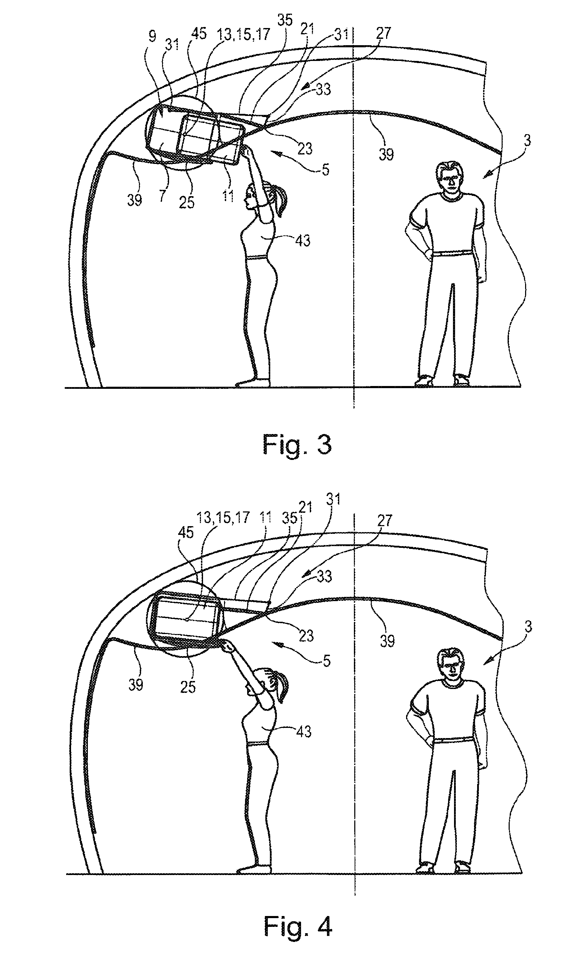

Das Staufach 7 ist über die Aufhängung 13 mit einer tragenden Struktur des Flugzeugs 1 verbunden. Die Aufhängung 13 ist derart ausgestaltet, dass das Staufach um eine fiktive erste Drehachse 17, die durch die Aufhängungspunkte geht, rotiert werden kann. Die Aufhängung ist des Weiteren so gewählt und ausgestaltet, dass die erste Drehachse 17 durch den geometrischen Mittelpunkt 15 des Stauraumes 7 geht. Der geometrische Mittelpunkt 15 des Stauraumes 7 fällt bei symmetrischer Ausgestaltung des Staufaches 7 und homogener Beladung des Stauraumes 9 mit der ersten Drehachse 17 zusammen. Dies ist noch deutlicher in den Fig. 3 bis Fig. 5 dargestellt. Durch die Lage des Schwerpunktes des beladenen Staufaches 7 in der ersten Drehachse 17 ist für den Passagier 43 eine Bewegung des Staufaches 7 zwischen der offenen und der geschlossenen Position nahezu ohne Kraftaufwand möglich.

An der Klappe 21 ist ein Handgriff 41 angeordnet, mit dessen Hilfe ein Passagier 43 die Staufachanordnung 5 öffnen und schließen kann. Der Handgriff 41 kann auch eine Schieß- und Einrastevorrichtung beinhalten, um das sichere Schließen der Klappe 21 zu gewährleisten. Die Klappe 21 weist des Weiteren eine zweite Drehachse 23 auf, um die die Klappe 21 rotiert werden kann. Das Hebelsystem 27 greift an dieser zweiten Drehachse 23 durch den ersten Arm 33 an und überträgt Bewegungen der Klappe 21 an das Staufach 7. Die erste Drehachse 17 des Staufaches 7 und die zweite Drehachse 23 der Klappe 21 sind parallel ausgerichtet.

An der Staufachanordnung 5 sind Richtelemente 19 angeordnet. Zum einen können diese in Form einer Feder beispielsweise an dem Hebelsystem 27 ausgestaltet sein und das Zurückkehren der Staufachanordnung 5 in die geschlossene Position fördern. Zum anderen können die Richtelemente 19 an dem Staufach 7 angeordnet sein und durch ein Kippen oder Verschieben des Gepäckstücks 11 die Verlagerung des Schwerpunktes in die erste Drehachse 17 bzw. in den geometrischen Mittelpunkt 15 des Staufaches 7 begünstigen.

Die Staufachanordnung 5 weist des Weiteren eine Verkleidung 25 an der unteren, äußeren, der Flugzeugkabine 3 zugewandten Seite des Staufaches 7 auf. Diese Verkleidung 25 ist ähnlich oder gleich der Kabinenverkleidung 39. Im geschlossenen Zustand der Staufachanordnung 5 schließt, wie in Fig. 2 zu sehen ist, die Klappe 21 bündig mit der Kabinenverkleidung 39 auf der einen Seite und mit der Verkleidung 25 des Staufaches 7 auf der anderen Seite bündig ab, so dass die Klappe 21 als eine Verlängerung der Kabinenverkleidung 39 und gleichzeitig der Verkleidung 25 des Staufachs 7 erscheint. Auf diese Weise entsteht eine optisch ansprechende glatte Oberfläche.

Im geöffneten Zustand der Staufachanordnung 5, wie in Fig. 1 dargestellt, schließt die Klappe 21 mit der inneren Staufachwand 37 bündig ab. Dadurch entsteht ebenfalls ein abgerundeter optischer Anblick und zusätzlich wird das Innere des Flugzeugs 1 vor Verunreinigungen geschützt.

Die Staufachanordnung 5 ist im oberen Bereich der Flugzeugkabine 3 angeordnet. Im offenen Zustand ist das Staufach 7 von einem Passagier 43 einfach zu erreichen. Beispiele für Größenordnungen könnten eine Kabinenhöhe a am Rand über den Sitzen (die in den Fig. zur besseren Übersichtlichkeit nicht dargestellt sind) von ca. 165 cm, und eine Staufachhöhe b bei offenem Staufach 7 von ca. 170 cm sein.

In Fig. 2 ist eine zu Fig. 1 analoge Seitenansicht einer Staufachanordnung 5 in einem Flugzeug 1 mit einem Staufach 7 in einer geschlossenen Position dargestellt. Im Unterschied zu Fig. 1 befindet sich das Hebelsystem 27 im geschlossenen Zustand der Staufachanordnung 5 in einem entspannten Zustand.

Das Staufach 7 ist in geschlossenem Zustand nicht mehr nahezu waagrecht, wie in Fig. 1 dargestellt, sondern etwas seitlich gekippt. Dieses Kippen ermöglicht Platzeinsparungen, da sich die Staufachanordnung 5 kompakt an der Seitenwand des Flugzeuges 1 befindet und weniger als im offenen Zustand in die Flugzeugkabine 3 reinragt.

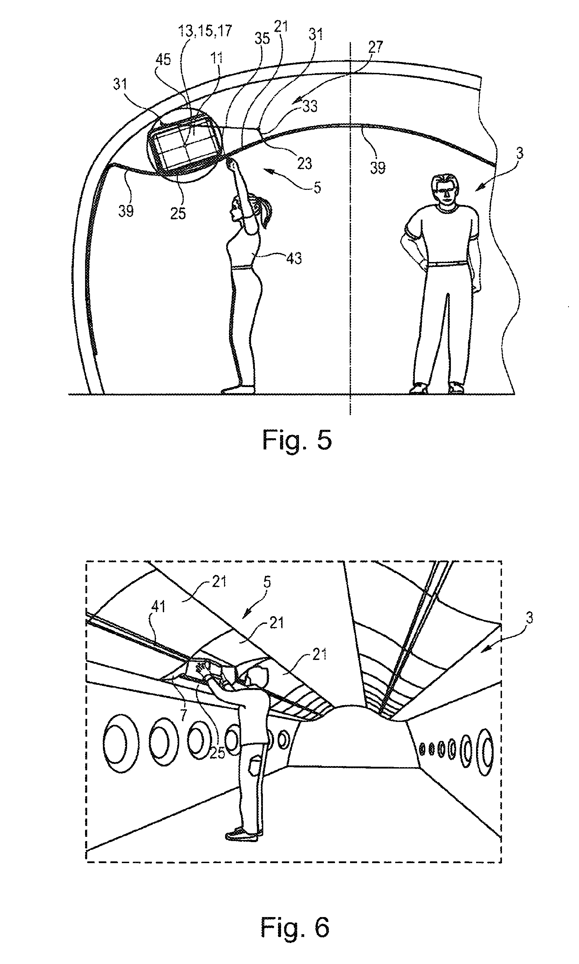

In den Fig. 3 bis Fig. 5 ist eine Seitenansicht einer Staufachanordnung 5 in einem Flugzeug 1 gemäß einem weiteren Ausführungsbeispiel der vorliegenden Erfindung dargestellt. Dabei ist die Staufachanordnung 5 in drei verschiedenen Positionen dargestellt. Fig. 3 zeigt die Staufachanordnung 5 in einer offenen Position. Fig. 4 zeigt die Staufachanordnung 5 in einer mittleren Position zwischen einem offenen und einem geschlossenen Zustand der Staufachanordnung 5. Und Fig. 5 zeigt die Staufachanordnung 5 in einer geschlossenen Position.

In den Fig. 3 bis Fig. 5 ist die Trajektorie 45 des Staufaches 7 als eine Bahn, die die Ränder des Staufaches 7 bei ihrer Bewegung zurücklegen dargestellt. Diese Trajektorie 45 entspricht einer gekrümmten Bahn und bei einer vollen Umdrehung kann sie einem Kreis entsprechen. In diesem Ausführungsbeispiel ist das Staufach 7 symmetrisch in Form eines Quaders und in der Seitenansicht als Rechteck ausgestaltet und mit einem Gepäckstück 11 homogen, also vollständig und ohne größere Hohlräume beladen. Der geometrische Mittelpunkt 15 des Stauraumes 9 und gleichzeitig des Staufaches 7 liegt auf dem Schnittpunkt der Diagonalen des Quaders bzw. Rechtecks und fällt mit der Aufhängung 13 bzw. einer ersten Drehachse 17 durch die Aufhängung 13 zusammen. Auch der Schwerpunkt des homogen beladenen Staufaches liegt auf der ersten Drehachse 17 und gleichzeitig auch im geometrischen Mittelpunkt 15.

Die Verkleidung 25 an dem Staufach 7 ist in den Fig. 3 bis Fig. 5 im Gegensatz zu den Fig. 1 und Fig. 2 nicht als Teil des Staufaches 7, sondern als separates Bauelement, das an dem Staufach 7 angeordnet ist, dargestellt. Des Weiteren sind in dem Ausführungsbeispiel in den Fig. 3 bis Fig. 5 beide Gelenke 31 außerhalb des Staufaches 7 angeordnet, wie besonders deutlich aus Fig. 5 hervorgeht.

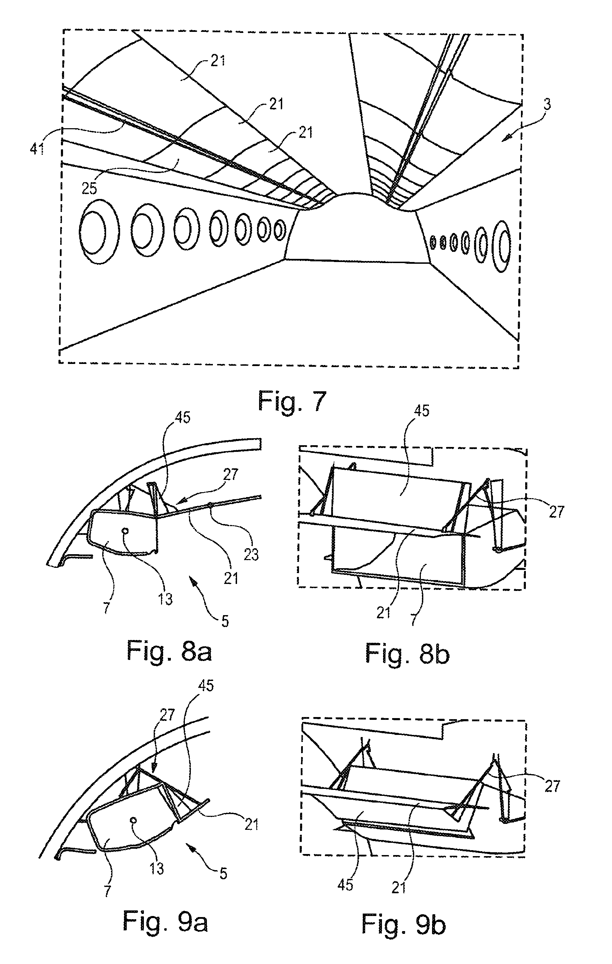

In den Fig. 6 und Fig. 7 ist eine räumlich-perspektivische Ansicht einer Flugzeugkabine 3 mit einer erfindungsgemäßen Staufachanordnung 5 mit mehreren Staufächern 7 dargestellt. In Fig. 6 befindet sich eines der Staufächer 7 in einer offenen Position ist. Wohingegen sich alle Staufächer 7 in Fig. 7 in einer geschlossenen Position befinden.

In Fig. 6 wird deutlich, dass das Staufach 7 sich beim Öffnen ausgehend von einem geschlossenen Zustand nach unten bewegt, während die Klappe 21 sich nach oben bewegt. In Fig. 7 sind alle Staufächer 7 in einer geschlossenen Position, so dass die Flugzeugkabine 3 einen geräumigen Eindruck vermittelt.

In den Fig. 8 und Fig. 9 ist ein weiteres Ausführungsbeispiel einer erfindungsgemäßen Staufachanordnung 5 mit einem Staufach 7 dargestellt. In den Fig. 8a und Fig. 8b befindet sich das Staufach 7 in einer offenen Position. Dabei ist das Staufach 7 in Fig. 8a in einer Seitenansicht und in Fig. 8b in einer räumlich-perspektivischen Ansicht dargestellt. Analog zeigen die Fig. 9a und Fig. 9b das Staufach 7 in einer geschlossenen Position, in Fig. 9a in einer Seitenansicht und in Fig. 9b in einer räumlich-perspektivischen Ansicht.

Im Unterschied zu den vorangehenden Ausführungsbeispielen weist die Staufachanordnung 5 in den Fig. 8 und Fig. 9 ein weiteres Verschlusselement 45 auf, das an der Klappe 21 angeordnet ist. Im offenen Zustand der Staufachanordnung 5 befindet sich das Verschlusselement 45 hinter der Klappe 21 und ist von der Flugzeugkabine 3 aus nicht sichtbar. In einem geschlossenen Zustand der Staufachanordnung 5 befindet sich das Verschlusselement 45 direkt vor einer Öffnung, durch die ein Gepäckstück 11 in das Staufach 7 gelangen kann. Dadurch kann sichergestellt werden, dass das Gepäckstück 11 in dem Staufach 7 bleibt und keine Möglichkeit hat bei eventuellen Turbulenzen hinter der Kabinenverkleidung 39 zu verrutschen.

Des Weiteren ist das Hebelsystem 27 in den Fig. 8 und Fig. 9 nicht an der zweiten Drehachse 23 der Klappe 21, sondern direkt an der Klappe 21 angeordnet. Die Bewegung des Staufaches 7 kann über das Hebelsystem 27 sowohl an die Klappe 21, als auch an das Verschlusselement 45 übertragen werden.

Abschließend wird angemerkt, dass Ausdrücke wie "aufweisend" oder ähnliche nicht ausschließen sollen, dass weitere Elemente oder Schritte vorgesehen sein können. Des Weiteren sei darauf hingewiesen, dass "eine" oder "ein" keine Vielzahl ausschließen. Außerdem können in Verbindung mit den verschiedenen Ausführungsformen beschriebene Merkmale beliebig miteinander kombiniert werden. Es wird ferner angemerkt, dass die Bezugszeichen in den Ansprüchen nicht als den Umfang der Ansprüche beschränkend ausgelegt werden sollen.

### BEZUGSZEICHENLISTE

- 1: Flugzeug
- 3: Flugzeugkabine
- 5: Staufachanordnung
- 7: Staufach
- 9: Stauraum
- 11: Gepäckstück
- 13: Aufhängung
- 15: geometrischer Mittelpunkt des Stauraumes
- 17: erste Drehachse
- 19: Richtelemente
- 21: Klappe
- 23: zweite Drehachse
- 25: Verkleidung
- 27: Hebelsystem
- 31: Gelenk
- 33: erster Arm
- 35: zweiter Arm
- 37: innere Staufachwand
- 39: Kabinenverkleidung
- 41: Handgriff
- 43: Passagier
- 45: Trajektorie des Staufaches
- 47: Verschlusselement
- a: Kabinenhöhe am Rand
- b: Staufachhöhe bei offenem Staufach

## Patentansprüche

1. Staufachanordnung (5) für ein Flugzeug (1), wobei die Staufachanordnung (5) aufweist:
ein Staufach (7) mit einem Stauraum (9) zur Aufnahme von Gepäckstücken (11);
eine Aufhängung (13) zur Anbringung des Staufachs (7) an eine tragende Struktur des Flugzeugs (1);
**dadurch gekennzeichnet, daß**
die Aufhängung (13) derart ausgestaltet ist, dass das Staufach (7) derart um einen geometrischen Mittelpunkt (15) des Stauraums (9) herum verschwenkt werden kann,
dass beim Verschwenken eine Abweichung einer Schwenkachse des Staufachs vom geometrischen Mittelpunkt um höchstens 20 cm stattfindet;
wobei die Aufhängung (13) derart ausgestaltet ist, dass ein Schwerpunkt des homogen beladenen Stauraumes (9) im Bereich der Schwenkachse liegt;
wobei das Verschwenken eine Translationsbewegung und eine Rotationsbewegung aufweist, und
wobei beim Verschwenken die Schwenkachse auf einer gekrümmten Bahn verfahren wird.

2. Staufachanordnung (5) gemäß Anspruch 1,
wobei die Aufhängung (13) als eine erste Drehachse (17) ausgestaltet ist.

3. Staufachanordnung (5) gemäß einem der Ansprüche 1 bis 2,
ferner aufweisend Richtelemente (19);
wobei die Richtelemente (19) ausgestaltet sind, eine Verlagerung eines Schwerpunktes des homogen beladenen Staufaches (7) in den geometrischen Mittelpunkt (15) zu begünstigen.

4. Staufachanordnung (5) gemäß einem der Ansprüche 1 bis 3,
ferner aufweisend eine um eine zweite Drehachse (23) schwenkbare Klappe (21); wobei die Staufachanordnung (5) derart ausgestaltet ist, dass beim Öffnen des Staufaches (7) die Klappe (21) sich um die zweite Drehachse (23) entgegen der Bewegungsrichtung des Staufaches (7) bewegt.

5. Staufachanordnung (5) gemäß Anspruch 4,
wobei das Staufach (7) durch ein Hebelsystem (27) mit der Klappe (21) derart in Verbindung steht, dass eine Bewegung des Staufaches (7) auf die Klappe (21) und umgekehrt übertragen wird.

6. Staufachanordnung (5) gemäß einem der Ansprüche 4 bis 5,
wobei das Staufach (7) ausgestaltet ist, sich zwischen einer ersten Position und einer zweiten Position zu bewegen;
wobei die Klappe (21) in der ersten Position den Zugriff auf das Staufach (7) verschließt; und
wobei das Staufach (7) in der ersten Position gegenüber der Horizontalen derart geneigt ist, dass die der Klappe (21) zugewandte Seite des Staufachs (7) sich oberhalb des geometrischen Mittelpunktes des Staufaches (7) befindet; und
wobei das Staufach (7) in der zweiten Position gegenüber der Horizontalen derart geneigt ist, dass die der Klappe (21) zugewandte Seite des Staufachs (7) sich auf Höhe oder unterhalb des geometrischen Mittelpunktes des Staufaches (7) befindet.

7. Staufachanordnung (5) gemäß Anspruch 6,
ferner aufweisend eine Verkleidung (25);
wobei die Verkleidung (25) an dem Staufach (7) angeordnet ist; und
wobei die Klappe (21) in der ersten Position als eine Verlängerung der Verkleidung (25) ausgestaltet ist.

8. Staufachanordnung (5) gemäß einem der Ansprüche 6 bis 7,
wobei die Klappe (21) in der zweiten Position als eine Verlängerung einer inneren Staufachwand (37) ausgestaltet ist.

9. Staufachanordnung (5) gemäß einem der Ansprüche 2 bis 8,
wobei die erste Drehachse (17) und die zweite Drehachse (23) parallel angeordnet sind.

10. Flugzeug (1) mit Staufachanordnung (5) gemäß einem der Ansprüche 1 bis 9.

11. Flugzeug (1) gemäß Anspruch 10,
wobei die Klappe (21) ausgestaltet ist, an einer Kabinenverkleidung (39) schwenkbar angeordnet zu werden; und
wobei die Klappe (21) in der ersten Position als eine Verlängerung der Kabinenverkleidung (39) ausgestaltet ist.

## Claims

1. Storage compartment configuration (5) for an aircraft (1), the storage compartment configuration comprising:
a storage compartment (7) with a storage space (9) for receiving pieces of luggage (11);
a suspension (13) for attaching the storage compartment (7) to a load-bearing structure of the aircraft (1);
**characterized in that**
the suspension (13) is designed in such a manner that the storage compartment (7) may be pivoted around a geometric center point (15) of the storage space (9) in such a way that during pivoting a deviation of maximally 20 cm occurs between a pivot axis of the storage compartment and the geometric center point;
wherein the suspension (13) is designed in such a manner that a center of gravity of the homogeneously loaded storage space (9) is located in the region of the pivot axis;
wherein during pivoting the pivot axis is moved along a curved path.

2. Storage compartment configuration (5) according to claim 1,
wherein the suspension (13) is designed as a first rotational axis (17).

3. Storage compartment configuration (5) according to one of claims 1 and 2, further comprising directional elements (19);
wherein the directional elements (19) are designed to encourage a displacement of a center of gravity of the homogeneously loaded storage compartment (7) into the geometric center point (15).

4. Storage compartment configuration (5) according to one of claims 1 to 3, further comprising a flap (21) pivotable around a second rotational axis (23); wherein the storage compartment configuration (5) is designed in such a manner that upon opening of the storage compartment (7), the flap (21) moves around the second rotational axis (23) opposite to the movement direction of the storage compartment (7).

5. Storage compartment configuration (5) according to claim 4,
wherein the storage compartment (7) is connected by a lever system (27) to the flap (21) in such a manner that a movement of the storage compartment (7) is transmitted to the flap (21) and vice versa.

6. Storage compartment configuration (5) according to one of claims 4 to 5,
wherein the storage compartment (7) is designed to move between a first position and a second position;
wherein the flap (21) closes the access to the storage compartment (7) in the first position; and
wherein the storage compartment (7) is inclined in relation to the horizontal in the first position in such a manner that the side of the storage compartment (7) facing toward the flap (21) is located above the geometric center point of the storage compartment (7); and
wherein the storage compartment (7) is inclined in relation to the horizontal in the second position in such a manner that the side of the storage compartment (7) facing toward the flap (21) is located at the height of or below the geometric center point of the storage compartment (7).

7. Storage compartment configuration (5) according to claim 6,
further comprising a paneling (25);
wherein the paneling (25) is arranged at the storage compartment (7); and
wherein the flap (21) is designed in the first position as an extension of the paneling (25).

8. Storage compartment configuration (5) according to one of claims 6 to 7,
wherein the flap (21) is designed in the second position as an extension of an inner storage compartment wall (37).

9. Storage compartment configuration (5) according to one of claims 2 to 8,
wherein the first rotational axis (17) and the second rotational axis (23) are arranged in parallel.

10. Aircraft (1) with a storage compartment configuration (5) according to one of claims 1 to 9.

11. Aircraft (1) according to claim 10,
wherein the flap (21) is designed to be pivotably arranged on cabin paneling (39); and
wherein the flap (21) is designed in the first position as an extension of the cabin paneling (39).

## Revendications

1. Ensemble compartiment de rangement (5) pour un avion (1), l'ensemble compartiment de rangement (5) présentant :
- un compartiment de rangement (7) comportant un espace de rangement (9) pour récevoir des bagages (11) ;
- une suspension (13) pour rapporter le compartiment de rangement (7) à une structure portante de l'avion (1);
**caractérisé par le fait que**
la suspension (13) est agencée de sorte que le compartiment de rangement (7) peut pivoter de telle manière autour d'un point central géométrique (15) de l'espace de rangement (9) que, lors du pivotement, un écart d'un axe de pivotement du compartiment de rangement du point central géométrique d'au plus 20 cm a lieu ; dans lequel la suspension (13) est agencée de sorte qu'un point de gravité de l'espace de rangement (9) chargé de manière homogène est situé au niveau de l'axe de pivotement ;
dans lequel le pivotement présente un mouvement de translation et un mouvement de rotation, et
dans lequel, lors du pivotement, l'axe de pivotement est déplacé sur une trajectoire coudée.

2. Ensemble compartiment de rangement (5) selon la revendication 1,
dans lequel la suspension (13) est agencée comme un premier axe de rotation (17).

3. Ensemble compartiment de rangement (5) selon l'une des revendications 1 à 2, présentant en outre des éléments directeurs (19),
dans lequel les éléments directeurs (19) sont agencés pour favoriser un déplacement d'un point de gravité du compartiment de rangement (7) chargé de manière homogène au point central géométrique (15).

4. Ensemble compartiment de rangement (5) selon l'une des revendications 1 à 3, présentant en outre une trappe (21) pivotant autour d'un second axe de rotation (23), dans lequel l'ensemble compartiment de rangement (5) est agencé de sorte qu'à l'ouverture du compartiment de rangement (7) la trappe (21) se déplace autour du second axe de rotation (23) dans le sens opposé au sens de déplacement du compartiment de rangement (7).

5. Ensemble compartiment de rangement (5) selon la revendication 4,
dans lequel le compartiment de rangement (7) se trouve en liaison avec la trappe (21) au moyen d'un système de levier (27) de sorte qu'un mouvement du compartiment de rangement (7) est transmis à la trappe (21) et inversement.

6. Ensemble compartiment de rangement (5) selon l'une des revendications 4 à 5,
dans lequel le compartiment de rangement (7) est agencé pour se déplacer entre une première position et une seconde position ;
dans lequel la trappe (21) ferme, dans la première position, l'accès au compartiment de rangement (7) ; et
dans lequel, dans la première position, le compartiment de rangement (7) est incliné de telle manière par rapport à l'horizontale que la face du compartiment de rangement (7) dirigée vers la trappe (21) se trouve au-dessus du point central géométrique du compartiment de rangement (7) ; et
dans lequel, dans la seconde position, le compartiment de rangement (7) est incliné de telle manière par rapport à l'horizontale que la face du compartiment de rangement (7) dirigée vers la trappe (21) se trouve à hauteur ou en dessous du point central géométrique du compartiment de rangement (7).

7. Ensemble compartiment de rangement (5) selon la revendication 6, présentant en outre un habillage (25),
dans lequel l'habillage (25) est disposé sur le compartiment de rangement (7) ; et
dans lequel la trappe (21) est agencé dans la première position comme un prolongement de l'habillage (25).

8. Ensemble compartiment de rangement (5) selon l'une des revendications 6 à 7,
dans lequel la trappe (21) est agencé dans la seconde position comme un prolongement d'une paroi intérieure (37) du compartiment de rangement.

9. Ensemble compartiment de rangement (5) selon l'une des revendications 2 à 8,
dans lequel le premier axe de rotation (17) et le second axe de rotation (23) sont disposés parallèles entre eux.

10. Avion (1) comportant un ensemble compartiment de rangement (5) selon l'une des revendications 1 à 9.

11. Avion (1) selon la revendication 10,
dans lequel la trappe (21) est agencée pour être disposée pivotante sur un habillage de cabine (39) ; et
dans lequel la trappe (21) est agencée, dans la première position, comme un prolongement de l'habillage de cabine (39).
